# EUROPEAN PATENT SPECIFICATION

(11) **EP 2 792 015 B1**
(45) Date of publication and mention of the grant of the patent: **28.06.2017**
(21) Application number: 11793940.5
(22) Date of filing: 22.11.2011
(51) Int. Cl.: H01M 4/86, H01M 4/134, H01M 4/36, H01M 4/90, H01M 12/08

(54) **HIGH SPECIFIC-ENERGY LI/02-CO2 BATTERY**
LI/02-CO2-BATTERIE MIT HOHER SPEZIFISCHER ENERGIE
BATTERIE AU LI/O2-CO2 À ÉNERGIE SPÉCIFIQUE ÉLEVÉE

(43) Date of publication of application: 22.10.2014
(73) Proprietor: Robert Bosch GmbH, 70442 Stuttgart (DE)
(72) Inventor: ALBERTUS, Paul, Mountain View, CA 94043 (US); VISWANATHAN, Venkatasubramanian, Stanford, CA 94305 (US); CHRISTENSEN, John, F., Mountain View, CA 94040 (US); KOZINSKY, Boris, Waban, MA 02468 (US); SANCHEZ-CARRERA, Roel, Somerville, MA 02143 (US); LOHMANN, Timm, 70565 Stuttgart (DE)
(74) Representative: Isarpatent
(86) International application number: PCT/US2011/061934
(87) International publication number: WO 2013/077870

(56) References cited:
- US-A1- 2005 095 506
- US-A1- 2007 117 007
- US-A1- 2010 112 454
- RICHARD PADBURY ET AL: "Lithiumoxygen batteriesLimiting factors that affect performance", JOURNAL OF POWER SOURCES, ELSEVIER SA, CH, vol. 196, no. 10, 7 January 2011 (2011-01-07), pages 4436-4444, XP028185614, ISSN: 0378-7753, DOI: 10.1016/J.JPOWSOUR.2011.01.032 [retrieved on 2011-01-24]

## Description

### TECHNICAL FIELD:

This invention relates to batteries and more particularly to lithium (Li) based batteries.

### BACKGROUND

A typical Li-ion cell contains a negative electrode, the anode, a positive electrode, the cathode, and a separator region between the negative and positive electrodes. One or both of the electrodes contain active materials that react with lithium reversibly. In some cases the negative electrode may include lithium metal, which can be electrochemically dissolved and deposited reversibly. The separator and positive electrode contain an electrolyte that includes a lithium salt.

Charging a Li-ion cell generally entails a generation of electrons at the positive electrode and consumption of an equal amount of electrons at the negative electrode with the electrons transferred via an external circuit. In the ideal charging of the cell, these electrons are generated at the positive electrode because there is extraction via oxidation of lithium ions from the active material of the positive electrode, and the electrons are consumed at the negative electrode because there is reduction of lithium ions into the active material of the negative electrode. During discharging, the opposite reactions occur.

Li-ion cells with a Li-metal anode may have a higher specific energy (in Wh/kg) and energy density (in Wh/L) compared to batteries with conventional carbonaceous negative electrodes. This high specific energy and energy density makes incorporation of rechargeable Li-ion cells with a Li-metal anode in energy storage systems an attractive option for a wide range of applications including portable electronics and electric and hybrid-electric vehicles.

At the positive electrode of a conventional lithium-ion cell, a lithium-intercalating oxide is typically used. Lithium-intercalating oxides (e.g., LiCoO₂, LiNi_{0.8}Co_{0.15}Al_{0.05}O₂, Li_{1.1}Ni_{0.3}Co_{0.3}Mn_{0.3}O₂) are typically limited to a theoretical capacity of ∼ 280 mAh/g (based on the mass of the lithiated oxide) and a practical capacity of 140 to 250 mAh/g, which is quite low compared to the specific capacity of lithium metal (3863 mAh/g).

Moreover, the low realized capacities of conventional Li-ion cells reduces the effectiveness of incorporating Li-ion cells into vehicular systems. Specifically, a goal for electric vehicles is to attain a range approaching that of present-day vehicles (>300 miles). Obviously, the size of a battery could be increased to provide increased capacity. The practical size of a battery on a vehicle is limited, however, by the associated weight of the battery. Consequently, the Department of Energy (DOE) in the USABC Goals for Advanced Batteries for EVs has set a long-term goal for the maximum weight of an electric vehicle battery pack to be 200 kg (this includes the packaging). Achieving the requisite capacity given the DOE goal requires a specific energy in excess of 600 Wh/kg.

Various materials are known to provide a promise of higher theoretical capacity for Li-based cells. For example, a high theoretical specific capacity of 1168 mAh/g (based on the mass of the lithiated material) is shared by Li₂S and Li₂O₂, which can be used as cathode materials. Other high-capacity materials include BiF₃ (303 mAh/g, lithiated) and FeF₃ (712 mAh/g, lithiated) as reported by *Amatucci, G. G. and N.* Pereira, "Fluoride based electrode materials for advanced energy storage devices," Journal of Fluorine Chemistry, 2007. 128(4): p. 243-262. Unfortunately, all of these materials react with lithium at a lower voltage compared to conventional oxide positive electrodes. Nonetheless, the theoretical specific energies are still very high (> 800 Wh/kg, compared to a maximum of ∼500 Wh/kg for a cell with lithium negative and conventional oxide positive electrodes).

One Li-based cell that has the potential of providing a driving range above 300 miles incorporates a lithium metal negative electrode and a positive electrode reacting with oxygen obtained from the environment. The weight of this type of system is reduced since the positive-electrode active material is not carried onboard the vehicle. Practical embodiments of this lithium-air battery may achieve a practical specific energy of 600 Wh/kg because the theoretical specific energy is 11,430 Wh/kg for Li metal, and 3,460 Wh/kg for Li₂O₂.

During discharge of the lithium-air cell, Li metal dissolves from the negative electrode, while at the positive electrode, lithium ions (Li⁺ ions) in the electrolyte react with oxygen and electrons to form a solid discharge product that ideally is lithium peroxide (Li₂O₂) or lithium oxide (Li₂O), which may coat the conductive matrix of the positive electrode and/or fill the pores of the electrode. In an electrolyte that uses a carbonate solvent the discharge products may include Li₂CO₃, Li alkoxides, and Li alkyl carbonates. In non-carbonate solvents such as CH₃CN and dimethyl ether the discharge products are less likely to react with the solvent. The pure crystalline forms of Li₂O₂, Li₂O, and Li₂CO₃ are electrically insulating, so that electronic conduction through these materials will need to involve vacancies, grains, or dopants, or short conduction pathways obtained through appropriate electrode architectures. During charge of an existing lithium-air cell, the Li₂O₂ or Li₂O may be oxidized to form O₂, Li⁺ in the electrolyte, and electrons at the positive electrode, while Li⁺ in the electrolyte is reduced to form Li metal at the negative electrode. If Li₂CO₃, Li alkoxides, or Li alkyl carbonates are present, O₂, CO₂, and Li⁺ in the electrolyte may form during charge, while Li⁺ in the electrolyte is reduced to form Li metal at the negative electrode. In general, it should be expected that cycling of a cell that forms Li alkoxides and Li alkyl carbonates in addition to Li₂CO₃ during discharge will have limited reversibility.

Abraham and Jiang published one of the earliest papers on the "lithium-air" system. *See* Abraham, K.M. and Z. Jiang, "A polymer electrolyte-based rechargeable lithium/oxygen battery"; Journal of the Electrochemical Society, 1996. 143(1): p. 1-5. Abraham and Jiang used an organic electrolyte and a positive electrode with an electrically conductive carbon matrix containing a catalyst to aid with the reduction and oxidation reactions. Previous lithium-air systems using an aqueous electrolyte have also been considered, but without protection of the Li metal anode, rapid hydrogen evolution occurs. *See* Zheng, J., et al., "Theoretical Energy Density of Li-Air Batteries"; Journal of the Electrochemical Society, 2008. 155: p. A432.

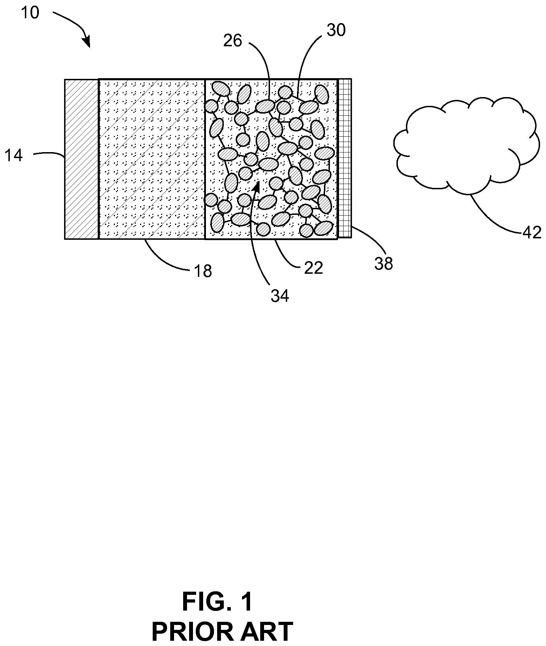

An electrochemical cell 10 using an organic electrolyte 34 is depicted in FIG. 1. The cell 10 includes a negative electrode 14, a positive electrode 22, porous separator 18, and current collector 38. The negative electrode 14 is typically metallic lithium. The positive electrode 22 includes carbon particles such as particles 26 possibly coated in a catalyst material (such as Au or Pt) and suspended in a porous, electrically conductive matrix 30. An electrolyte solution 34 containing a salt such as LiPF₆ or LiN(CF₃SO₂)₂ dissolved in an organic solvent such as dimethyl ether or CH₃CN at a concentration of one (1) molar permeates both the porous separator 18 and the positive electrode 22. The concentration of the salt provides the electrolyte with an adequate conductivity which reduces the internal electrical resistance of the cell 10 to allow a high power.

The positive electrode 22 is enclosed by a barrier 38. The barrier 38 in FIG. 1 is formed from an aluminum mesh configured to allow oxygen from an external source 42 to enter the positive electrode 22. The wetting properties of the positive electrode 22 and the separator 18 prevent the electrolyte 34 from leaking out of the positive electrode 22. Oxygen from external source 42 enters the positive electrode 22 through the barrier 38 while the cell 10 discharges, and oxygen exits the positive electrode 22 through the barrier 38 as the cell 10 is charged. In operation, as the cell 10 discharges, oxygen and lithium ions combine to form a discharge product such as Li₂O₂, Li₂O, or Li₂CO₃ (which may form when carbonate solvents are used).

A number of investigations into the problems associated with Li-air batteries have been conducted as reported, for example, by Beattie, S., D. Manolescu, and S. Blair, "High-Capacity Lithium-Air Cathodes," Journal of the Electrochemical Society, 2009. 156: p. A44, Kumar, B., et al., "A Solid-State, Rechargeable, Long Cycle Life Lithium-Air Battery, " Journal of the Electrochemical Society, 2010. 157: p. A50, Read, J., "Characterization of the lithium/oxygen organic electrolyte battery," Journal of the Electrochemical Society, 2002. 149: p. A1190 Read, J., et al., "Oxygen transport properties of organic electrolytes and performance of lithium/oxygen battery," Journal of the Electrochemical Society, 2003. 150: p. A1351, Yang, X. and Y. Xia, "The effect of oxygen pressures on the electrochemical profile of lithium/oxygen battery," Journal of Solid State Electrochemistry: p. 1-6, and Ogasawara, T., et al., "Rechargeable Li2O2 Electrode for Lithium Batteries," Journal of the American Chemical Society, 2006. 128(4): p. 1390-1393. Nonetheless, several challenges remain to be addressed for lithium-air batteries. These challenges include reducing the hysteresis between the charge and discharge voltages (which limits the round-trip energy efficiency), improving the number of cycles over which the system can be cycled reversibly, limiting dendrite formation at the lithium metal surface, protecting the lithium metal (and possibly other materials) from moisture and other potentially harmful components of air, and designing a system that achieves high specific energy and acceptable specific power levels.

What is needed therefore is a lithium based energy storage system that provides increased specific energy relative to conventional Li-ion cells that use a cathode active material that intercalates Li.

### SUMMARY

In accordance with one embodiment, an electrochemical cell includes a negative electrode including a form of lithium, a positive electrode spaced apart from the negative electrode and configured to use a form of oxygen and carbon dioxide as reagents in a reversible electrochemical reaction wherein Li₂CO₃ is formed during discharge and consumed at the positive electrode during charge, a separator positioned between the negative electrode and the positive electrode, and an electrolyte including a salt. wherein the ratio of CO₂ to O₂ consumed in the cell during full discharge from a fully charged state is 2:1.

In a further embodiment, an electrochemical cell includes a negative electrode including a form of lithium, a positive electrode spaced apart from the negative electrode, a separator positioned between the negative electrode and the positive electrode, and an electrolyte including a salt, the electrochemical cell characterized by the formation of Li₂CO₃ at the positive electrode during a discharging cycle and characterized by the oxidation of Li₂CO₃ resulting in the formation of CO₂ and O₂ during a charge cycle.

### BRIEF DESCRIPTION OF DRAWINGS

FIG. 1 depicts a prior art lithium-air cell including two electrodes and an electrolyte;
FIG. 2 depicts a schematic view of a Li/O₂-CO₂ cell with two electrodes and a reservoir configured to exchange oxygen and carbon dioxide with a positive electrode for a reversible reaction with lithium; and
FIG. 3 depicts a schematic view of another Li/O₂-CO₂ cell with two electrodes and a reservoir, where the positive electrode is further configured to exchange oxygen with an external oxygen source.

### DETAILED DESCRIPTION

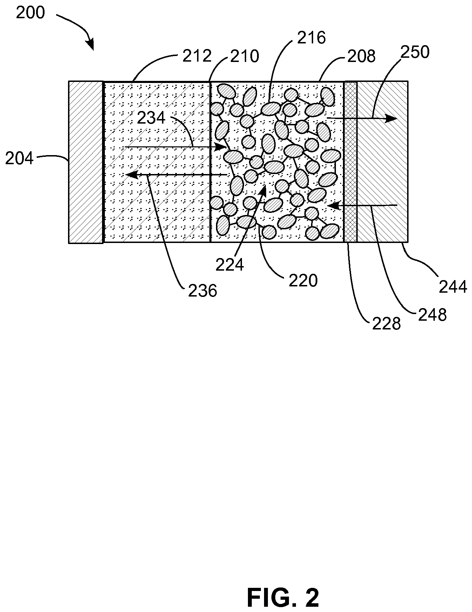

A schematic of an electrochemical cell 200 is shown in Fig. 2. The electrochemical cell 200 includes a negative electrode 204 separated from a positive electrode 208 by a porous separator 212. The negative electrode 204 may be formed from metallic lithium. The positive electrode 208 in this embodiment includes carbon particles 216 possibly covered in a catalyst material suspended in a porous matrix 220. The porous matrix 220 is formed from a conductive material such as conductive carbon or a nickel foam, although various alternative matrix structures and materials known to the art may be used. The separator 212 prevents the negative electrode 204 from electrically connecting with the positive electrode 208.

The electrochemical cell 200 includes an electrolyte solution 224 present in the separator 212 and the positive electrode 208. In the exemplary embodiment of FIG. 2, the electrolyte solution 224 includes a salt, such as LiPF₆ (lithium hexafluorophosphate), dissolved in an organic solvent of dimethyl ether. While in this embodiment the electrochemical cell 200 is described as incorporating a particular non-aqueous solvent, in other embodiments other non-aqueous solvents (e.g., carbonates) or aqueous solvents may be incorporated. In one alternative embodiment, an aqueous solvent is incorporated along with a lithium metal anode with a protective coating such as LISICON, commercially available from Ohara Inc., Japan.

A barrier 228 separates the positive electrode 208 from a reservoir 244. The reservoir 244 may be any vessel suitable to hold oxygen, carbon dioxide, and other gases supplied to and emitted by the positive electrode 208. While the reservoir 244 is shown as an integral member of the electrochemical cell 200 attached to the positive electrode 208, alternate embodiments could employ a hose or other conduit to place the reservoir 244 in fluid communication with positive electrode 208. Various embodiments of the reservoir 244 are envisioned, including rigid tanks, inflatable bladders, and the like. In FIG. 2, the barrier 228 is an aluminum mesh which permits oxygen and carbon dioxide to flow between the positive electrode 208 and reservoir 244 while also preventing the electrolyte 224 from leaving the positive electrode 208.

The electrochemical cell 200 may discharge with lithium metal in the negative electrode 204 ionizing into a Li⁺ ion with a free electron e⁻. Li⁺ ions travel through the separator 212 as indicated by arrow 234 towards the positive electrode 208. Oxygen and carbon dioxide are supplied from the reservoir 224 through the barrier 228 as indicated by arrow 248. Free electrons e⁻ flow into the positive electrode as indicated by arrow 248. The oxygen atoms and Li⁺ ions form a discharge product inside the positive electrode 208, aided by the optional catalyst material on the carbon particles 216. As seen in the following equations, during the discharge process metallic lithium is ionized, combining with oxygen, carbon dioxide and free electrons to form Li₂CO₃ discharge product that may coat the surfaces of the carbon particles 216 or be soluble in the electrolyte.

*Li* → *Li*⁺ + *e*⁻ (negative electrode)

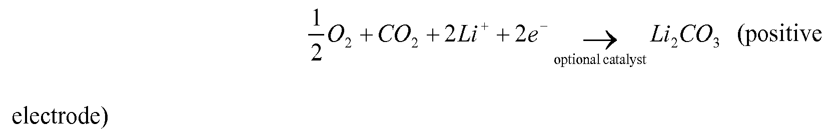

As described above, the reservoir 244 supplies oxygen and carbon dioxide to the positive electrode during the discharge process. The provision of carbon dioxide helps to ensure that the Li₂CO₃ in the foregoing equation obtains the carbon from the carbon dioxide rather than from the electrolyte. In the case of both an aqueous and a non-aqueous solvent, the CO₂ is preferably the only carbon-containing species in the liquid phase that may react. Specifically, Mizuno, F., et al., "Rechargeable Li-Air Batteries with Carbonate-Based Liquid Electrolytes," Electrochemical Society of Japan, 2010. 78(5): p. 403-405 reported that in carbonate-based electrolytes, Li₂CO₃ rather than Li₂O₂ or Li₂O is the actual discharge product when O₂ is fed as a reactant. The carbon in the Mizuno electrolyte is consumed in the formation of Li₂CO₃, possibly as a result of reaction with Li₂O or Li₂O₂. Cycling of a lithium-air cell in carbonate-based electrolytes in the absence of another carbon source therefore involves the repeated decomposition of the carbonate solvent (or other carbon-based solvent), which limits the number of available cycles. Accordingly, provision of a carbon source in the form of CO₂, as is done with the embodiment of FIG. 2, may help to preserve the electrolyte and increase the number of available cycles.

Additionally, a completely stable solvent is generally desired. As reported by Laoire, C., et al., "Influence of Nonaqueous Solvents on the Electrochemistry of Oxygen in the Rechargeable Lithium- Air Battery," The Journal of Physical Chemistry C, 2010. 114(19): p. 9178-9186, dimethyl ether has been found to be more stable than carbonate solvents. Moreover, the equilibrium potential of the formation of the discharge product, Li₂O₂ (2.96 V), is lower than that of Li₂CO₃ formed from Li, CO₂, and O₂ (3.86V). Thus, if a source of carbon dioxide, or possibly a carbonate group part of a larger molecule, is available in the system, the thermodynamically favored discharge product is Li₂CO₃.

Once carbon dioxide is present, even if Li₂O₂ has already formed, there is a thermodynamic driving force for the Li₂O₂ to react with the CO₂ (and additional oxygen in the electrolyte) to form Li₂CO₃. Optimally, the stoichiometric carbon dioxide : oxygen molar feed rate is 2:1, although the solubility of these different molecules are not equal such that different pressures may be applied to the individual gases so that the concentrations in the liquid phase have a molar ratio of 2:1. Some useful solubility values of various materials at 1 atmosphere and 25°C are provided in the table below:

| Solute and solvent | Solubility (g/L) |
|---|---|
| O₂ in H₂O | 0.0083 |
| CO₂ in H₂O | 1.45 |
| O₂ in propylene carbonate | 0.11 |
| CO₂ in propylene carbonate | 6.115 |
| Li₂CO₃ in H₂O | 13.2 |
| LiOH in H₂O | 128 |

The theoretical specific energy of a system wherein carbon dioxide is supplied is about 2800 Wh/kg Li₂CO₃, much higher than the theoretical specific energy of conventional lithium-ion systems making use of a cathode with an intercalation active material.

The oxygen and carbon dioxide may be pumped into the reservoir 244 during manufacture of the electrochemical cell 200. In an alternative embodiment, the carbon dioxide used in the electrochemical cell 200 may be introduced by adding a sacrificial carbon-containing species. For example, a carbonate solvent, such as propylene carbonate, may be added to the electrolyte 224. During the first discharge cycle described above, the carbonate solvent is sacrificed, yielding carbon dioxide. Once liberated, the carbon dioxide reacts with oxygen and lithium as described above. As described in more detail below, the carbon dioxide generated during subsequent charge cycles can be stored in the reservoir 244.

When desired, the electrochemical cell 200 may be charged from the discharged state. Electrochemical cell 200 may be charged by introducing an external electric current which oxidizes the Li₂CO₃ discharge product into lithium, oxygen, and carbon dioxide. The external current drives lithium ions toward the negative electrode 204 in direction 236 where the Li⁺ ions are reduced to metallic lithium, and generates oxygen and carbon dioxide which diffuse through the barrier 228 in the direction of arrow 250. The charging process which occurs at ambient temperatures, that is, about 50°C or less, reverses the chemical reactions of the discharge process, as shown in the following equations.

*Li*⁺ + *e*⁻ → *Li* (negative electrode)

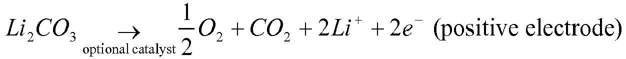

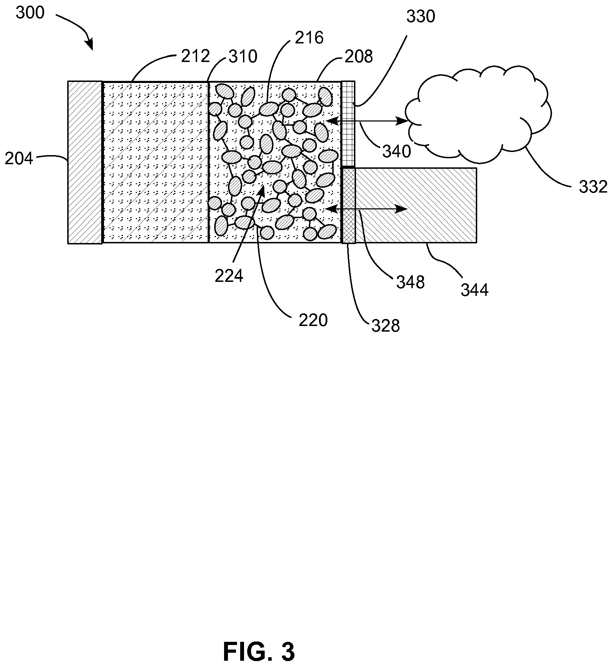

FIG. 3 shows an alternative embodiment of an electrochemical cell 300 that is a modification of the electrochemical cell 200 of FIG. 2. The electrochemical cell 300 includes the negative electrode 204 separated from the positive electrode 208 by the porous separator 212. The positive electrode 208 includes the carbon particles 216 suspended in the porous matrix 220. The electrolyte solution 224 is also in the separator 212 and the positive electrode 208 just as shown in FIG. 2. The electrochemical cell 300 also employs a reservoir 344 coupled to the positive electrode 208, with a filter 328 allowing carbon dioxide to flow between the reservoir 344 and the positive electrode 208.

Electrochemical cell 300 differs from the design of FIG. 2 by placing the positive electrode 208 in selective fluid communication with an external oxygen source 332 through a barrier 330. The barrier 330 may be embodied as a selectively permeable gas membrane, such as a polyimide membrane or the like as described by Scholes et al., "Carbon Dioxide Separation through Polymeric Membrane Systems for Flue Gas Applications," Recent Patents on Chemical Engineering, 2008, 1, 52-66. The barrier 330 allows oxygen to enter and exit the positive electrode 208 as shown by arrows 340, while preventing carbon dioxide and the electrolyte material 224 from leaving the positive electrode. The external oxygen source 332 may be a source of pure oxygen, or a mixture of gases including the Earth's atmosphere.

The reservoir 344 is configured to exchange carbon dioxide with the positive electrode through filter 328 in a similar manner to that of FIG. 2. The filter 328 in FIG. 3 may allow both oxygen and carbon dioxide to enter and leave the reservoir 344, or may be configured to only allow carbon dioxide to enter and leave the reservoir 344 as shown by arrows 348. The chemical reactions occurring in the electrochemical cell 300 during the charge and discharge cycles are the same as described above with reference to FIG. 2.

The present invention is also relevant to Li-air cells that make use of an aqueous electrolyte. The aqueous Li-air battery also has a very high theoretical specific energy. Li-air cells are described, for example, in U.S. Patent No. 7,666,233 B2, U.S. Patent No. 7,282,295 B2, and Suto, K, Nakanishi, S, Iba, H, and Nishio, K, "An Aqueous Li-Air Battery Based on a Novel Reservoir Concept," Meet. Abstr. - Electrochem. Soc. 1003 668 (2010). Li-air cells with an aqueous electrolyte require a protection layer on the Li metal anode to prevent reaction of the aqueous electrolyte with Li metal, and may have LiOH as the discharge product. Thus, at the anode the reaction is Li ↔ Li⁺ + e⁻, while at the cathode the reaction is O₂+2H₂O+4e⁻↔4OH⁻. Accordingly, the overall reaction is 4Li+O₂+2H₂O↔4LiOH. In accordance with one embodiment, O₂ and CO₂ are added as reactants to an aqueous Li-air battery, such that the overall reaction is 2Li+1/2O₂+CO₂↔Li₂CO₃. In this embodiment, during the discharge process, water is not a reactant.

While the invention has been illustrated and described in detail in the drawings and foregoing description, the same should be considered as illustrative and not restrictive in character. Only the preferred embodiments have been presented and all changes, modifications and further applications that come within the spirit of the invention are desired to be protected.

Furthermore, the application describes the following embodiments:
Embodiment 14. An electrochemical cell, comprising:
   a negative electrode including a form of lithium;
   a positive electrode spaced apart from the negative electrode;
   a separator positioned between the negative electrode and the positive electrode; and
   an electrolyte including a salt, the electrochemical cell characterized by the formation of Li₂CO₃ at the positive electrode during a discharging cycle and characterized by the oxidation of Li₂CO₃ resulting in the formation of CO₂ and O₂ during a charge cycle.
Embodiment 15. The electrochemical cell of embodiment 14, characterized by a stoichiometric consumption ratio of CO₂ to O₂ of 2:1.
Embodiment 16. The electrochemical cell of embodiment 15, further comprising:
   a reservoir fluidly coupled with the positive electrode, the reservoir configured to receive carbon dioxide formed at the positive electrode and to provide carbon dioxide to the positive electrode.
Embodiment 17. The electrochemical cell of embodiment 16, wherein the reservoir is further configured to receive oxygen formed at the positive electrode and to provide oxygen to the positive electrode.
Embodiment 18. The electrochemical cell of embodiment 15 further comprising:
   a barrier configured to permit an exchange of oxygen between the positive electrode and an external oxygen source, and to contain CO₂ within the positive electrode.
Embodiment 19. The electrochemical cell of embodiment 15, wherein the discharging and charge cycles occur at a temperature less than about 50°C.

## Claims

1. An electrochemical cell (200, 300), comprising:
a negative electrode (204) including a form of lithium;
a positive electrode (208) spaced apart from the negative electrode (204) and configured to use O₂ and CO₂ as reagents in a reversible electrochemical reaction wherein Li₂CO₃ is formed during discharge and consumed during charge at the positive electrode (208); a reservoir (244, 344) fluidly coupled with the positive electrode (208) wherein the reservoir (244, 344) is configured to supply CO to the positive electrode (208); a separator (212) positioned between the negative electrode (204) and the positive electrode (208); and
an electrolyte (224) including a salt, wherein the ratio of CO₂ to O₂ consumed in the cell during full discharge from a fully charged state is 2:1.

2. The electrochemical cell (200, 300) of claim 1 further comprising:
a reservoir (244, 344) fluidly coupled with the positive electrode (208), the reservoir (244, 344) configured to capture CO₂ emitted from the positive electrode (208); and
a reservoir filter (228, 328) positioned between the reservoir (244, 344) and the positive electrode (208), the reservoir filter (228, 328) configured to hold the electrolyte in the positive electrode (208).

3. The electrochemical cell (200) of claim 3, wherein the reservoir (244) is further configured to capture O₂ emitted from the positive electrode (208), and to supply O₂ to the positive electrode (208).

4. The electrochemical cell of claim 2 (300) further comprising a barrier (330) configured to permit an exchange of O₂ between the positive electrode (208) and an external O₂ source (332), and to impede an emission of CO₂ from the positive electrode (208) to the external oxygen source (332).

5. The electrochemical cell (200, 300) of claim 2, wherein the positive electrode (208) is porous, the positive electrode (208) including a plurality of carbon particles (216) covered in a catalyst (220).

6. The electrochemical cell (200, 300) of claim 2, wherein:
the electrolyte (224) comprises an aqueous solvent; and
the negative electrode (204) includes a protective layer on a lithium metal.

7. The electrochemical cell (200, 300) of claim 7, wherein the protective layer comprises a lithium superionic conductor.

8. The electrochemical cell (200, 300) of claim 7, **characterized by** a stoichiometric consumption ratio of CO₂ to O₂ of 2:1.

9. The electrochemical cell (200, 300) of claim 1, wherein the salt includes lithium.

10. The electrochemical cell (200, 300) of claim 9, wherein the salt is primarily composed of lithium hexafluorophosphate.

11. The electrochemical cell (200, 300) of claim 1, wherein the reversible electrochemical reaction occurs at a temperature less than about 50°C.

12. The electrochemical cell (200, 300) of claim 1, wherein the electrolyte (224) comprises CH₃CN or dimethyl ether.

## Patentansprüche

1. Elektrochemische Zelle (200, 300), umfassend:
eine negative Elektrode (204), die eine Form von Lithium enthält;
eine positive Elektrode (208), die von der negativen Elektrode (204) beabstandet und ausgelegt ist, um O₂ und CO₂ als Reagenzien in einer reversiblen elektrochemischen Reaktion zu verwenden, wobei Li₂CO₃ an der positiven Elektrode (208) während dem Entladen gebildet wird und während dem Laden verbraucht wird;
einen Behälter (244, 344), der in fluidischer Verbindung mit der positiven Elektrode (208) steht, wobei der Behälter (244, 344) ausgelegt ist, um CO₂ der positiven Elektrode (208) zuzuführen;
ein Abscheider (212), der zwischen der negativen Elektrode (204) und der positiven Elektrode (208) positioniert ist; und einen Elektrolyt (224), der ein Salz enthält,
wobei das Verhältnis von CO₂ zu O₂, das in der Zelle während einer vollständigen Entladung vom vollständig geladenen Zustand verbraucht wird, 2:1 beträgt.

2. Elektrochemische Zelle (200, 300) nach Anspruch 1, ferner umfassend:
einen Behälter (244, 344), der in fluidischer Verbindung mit der positiven Elektrode (208) steht, wobei der Behälter (244, 344) ausgelegt ist, um CO₂ einzufangen, das von der positiven Elektrode (208) emittiert wird; und
einen Behälterfilter (228, 328), der zwischen dem Behälter (244, 344) und der positiven Elektrode (208) positioniert ist, wobei der Behälterfilter (228, 328) ausgelegt ist, um den Elektrolyt in der positiven Elektrode (208) zu halten.

3. Elektrochemische Zelle (200) nach Anspruch 3, wobei der Behälter (244) ferner ausgelegt ist, um O₂ einzufangen, das von der positiven Elektrode (208) emittiert wird, und O₂ der positiven Elektrode (208) zuzuführen.

4. Elektrochemische Zelle nach Anspruch 2 (300), umfassend ferner eine Barriere (330), die ausgelegt ist, um einen Austausch von O₂ zwischen der positiven Elektrode (208) und einer externen O₂-Quelle (332) zu ermöglichen und eine Emission von CO₂ von der positiven Elektrode (208) zu der externen Sauerstoffquelle (332) zu verhindern.

5. Elektrochemische Zelle (200, 300) nach Anspruch 2, wobei die positive Elektrode (208) porös ist und wobei die positive Elektrode (208) eine Vielzahl von Kohlenstoffpartikeln (216) enthält, die mit einem Katalysator (220) bedeckt sind.

6. Elektrochemische Zelle (200, 300) nach Anspruch 2, wobei:
der Elektrolyt (224) ein wässriges Lösungsmittel enthält; und
die negative Elektrode (204) eine Schutzschicht auf einem Lithiummetall enthält.

7. Elektrochemische Zelle (200, 300) nach Anspruch 7, wobei die Schutzschicht einen Lithium-Ionenleiter enthält.

8. Elektrochemische Zelle (200, 300) nach Anspruch 7, das durch ein stöchiometrisches Verbrauchsverhältnis von CO₂ zu O₂ von 2:1 gekennzeichnet ist.

9. Elektrochemische Zelle (200, 300) nach Anspruch 1, wobei das Salz Lithium enthält.

10. Elektrochemische Zelle (200, 300) nach Anspruch 9, wobei das Salz hauptsächlich aus Lithium-Hexafluorphosphat besteht.

11. Elektrochemische Zelle (200, 300) nach Anspruch 1, wobei die reversible elektrochemische Reaktion bei einer Temperatur von weniger als etwa 50 °C auftritt.

12. Elektrochemische Zelle (200, 300) nach Anspruch 1, wobei der Elektrolyt (224) CH₃CN oder Dimethylether enthält.

## Revendications

1. Cellule électrochimique (200, 300) comprenant :
une électrode négative (204) comprenant une forme de lithium ;
une électrode positive (208) espacée de l'électrode négative (204) et configurée pour utiliser du O₂ et du CO₂ comme réactifs dans une réaction électrochimique réversible, du Li₂O₃ étant formé durant la décharge et consommé durant la charge à l'électrode positive (208) ;
un réservoir (244, 344) en communication fluidique avec l'électrode positive (208), le réservoir (244, 344) étant configuré pour fournir du CO₂ à l'électrode positive (208) ;
un séparateur (212) positionné entre l'électrode négative (204) et l'électrode positive (208) ; et
un électrolyte (224) comprenant un sel,
le rapport de CO₂ à O₂ consommés dans la cellule durant le déchargement complet d'un état complètement chargé étant de 2 : 1.

2. Cellule électrochimique (200, 300) selon la revendication 1 comprenant en outre :
un réservoir (244, 344) en communication fluidique avec l'électrode positive (208), le réservoir (244, 344) étant configuré pour capturer le CO₂ émis à partir de l'électrode positive (208) ;
et
un filtre de réservoir (228,328) positionné entre le réservoir (244, 344) et l'électrode positive (208), le filtre de réservoir (228, 328) étant configuré pour maintenir l'électrolyte dans l'électrode positive (208).

3. Cellule électrochimique (200) selon la revendication 3, dans laquelle le réservoir (244) est configuré en outre pour capturer le O₂ émis à partir de l'électrode positive (208), et pour fournir le O₂ à l'électrode positive (208).

4. Cellule électrochimique selon la revendication 2 (300) comprenant en outre une barrière (330) configurée pour permettre un échange de O₂ entre l'électrode positive (208) et une source externe de O₂ (332), et d'empêcher une émission de CO₂ à partir de l'électrode positive (208) à la source d'oxygène externe (332).

5. Cellule électrochimique (200, 300) selon la revendication 2, dans laquelle l'électrode positive (208) est poreuse, l'électrode positive (208) comprenant une pluralité de particules de carbone (216) recouvertes dans un catalyseur (220).

6. Cellule électrochimique (200, 300) selon la revendication 2, dans laquelle :
l'électrolyte (224) comprend un solvant aqueux ; et
l'électrode négative (204) comprend une couche protectrice sur un métal de lithium.

7. Cellule électrochimique (200, 300) selon la revendication 7, dans laquelle la couche protectrice comprend un conducteur superionique de lithium.

8. Cellule électrochimique (200, 300) selon la revendication 7, **caractérisée par** un rapport de consommation stoechiométrique de CO₂ à O₂ de 2 : 1.

9. Cellule électrochimique (200, 300) selon la revendication 1, dans laquelle le sel comprend du lithium.

10. Cellule électrochimique (200, 300) selon la revendication 9, dans laquelle le sel est composé principalement d'hexafluorophosphate de lithium.

11. Cellule électrochimique (200, 300) selon la revendication 1, dans laquelle la réaction électrochimique réversible se produit à une température de moins d'environ 50 °C.

12. Cellule électrochimique (200, 300) selon la revendication 1, dans laquelle l'électrolyte (224) comprend du CH₃CN ou de l'éther diméthylique.
